(19) Europäisches Patentamt / European Patent Office / Office européen des brevets

(11) **EP 2 884 456 B1**

(12) **FASCICULE DE BREVET EUROPEEN**

(45) Date de publication et mention de la délivrance du brevet: **25.05.2016 Bulletin 2016/21**

(51) Int Cl.:
**G06T 5/00** (2006.01)          **G06T 5/10** (2006.01)
**G06T 5/50** (2006.01)

(21) Numéro de dépôt: **14196012.0**

(22) Date de dépôt: **03.12.2014**

(54) **Procédé de réstitution du mouvement haute fréquence de la ligne de visée d'un imageur**

Verfahren zur Wiedergabe der Hochfrequenzbewegung der Visierlinie eines Bildgebers

Method for restoring the high-frequency movement of the line of sight of an imaging device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2013 FR 1302898**

(43) Date de publication de la demande:
**17.06.2015 Bulletin 2015/25**

(73) Titulaire: **Thales**
**92200 Neuilly Sur Seine (FR)**

(72) Inventeurs:
• **Gaucel, Jean-Michel**
  **06150 CANNES LA BOCCA (FR)**
• **Bernot, Marc**
  **06150 CANNES LA BOCCA (FR)**
• **Pigouche, Olivier**
  **06130 GRASSE (FR)**

(74) Mandataire: **Henriot, Marie-Pierre**
**Marks & Clerk France**
**Conseils en Propriété Industrielle**
**Immeuble Visium**
**22, Avenue Aristide Briand**
**94117 Arcueil Cedex (FR)**

(56) Documents cités:
• **CARON, Julien: "Restauration en échantillonage irrégulier - Théorie et applications aux signaux et images satellitaires", Thèse de Doctorat , 17 septembre 2013 (2013-09-17), XP055139098, Extrait de l'Internet: URL:http://hal.archives-ouvertes.fr/docs/0 0/86/25/19/PDF/Thesis_JCaron.pdf [extrait le 2014-09-09]**
• **D. KANG ET AL: "PHASE DIFFERENCE CORRECTION METHOD FOR PHASE AND FREQUENCY IN SPECTRAL ANALYSIS", MECHANICAL SYSTEMS AND SIGNAL PROCESSING, vol. 14, no. 5, 2000, pages 835-843, XP055139699, ISSN: 0888-3270, DOI: 10.1006/mssp.1999.1284**
• **Xie Ming ET AL: "CORRECTIONS FOR FREQUENCY, AMPLITUDE AND PHASE IN A FAST FOURIER TRANSFORM OF A HARMONIC SIGNAL Academic Press Limited", Mechanical Systems and Signal Processing, 1996, pages 211-221, XP055139697, Extrait de l'Internet: URL:http://www.sciencedirect.com/science/a rticle/pii/S0888327096900151/pdf?md5=02d68 a2b8f73fef274e07eeda9014c1e&pid=1-s2.0-S08 88327096900151-main.pdf [extrait le 2014-09-11]**
• **JIAN GUO LIU ET AL: "FFT Selective and Adaptive Filtering for Removal of Systematic Noise in ETM+ Imageodesy Images", IEEE TRANSACTIONS ON GEOSCIENCE AND REMOTE SENSING, IEEE SERVICE CENTER, PISCATAWAY, NJ, US, vol. 44, no. 12, 2006, pages 3716-3724, XP011150575, ISSN: 0196-2892, DOI: 10.1109/TGRS.2006.881752**

**EP 2 884 456 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Le domaine de l'invention est celui de la restitution de micro-vibrations d'un imageur monté sur un porteur tel qu'un satellite soumis à des perturbations d'attitude lors de son déplacement.

Avec l'amélioration de la résolution des instruments optiques, les micro-vibrations peuvent devenir problématiques. Pour restituer les images acquises par un imageur monté sur un satellite, il est nécessaire de connaître avec précision l'orientation et le mouvement de sa ligne de visée. Dans le domaine satellitaire, le SCAO acronyme de l'expression Système de Commande d'Attitude et d'Orbite, permet de restituer l'attitude du satellite, dans le domaine des basses fréquences (0-4hz). Les perturbations de la ligne de visée de plus hautes fréquences aussi désignées micro-vibrations, dégrade la qualité des images sous forme notamment de distorsion géométrique, et ce d'autant plus que ces images sont à haute résolution ; ces perturbations sont difficilement modélisables et donc difficilement prévisibles.

Dans le cas où un imageur en vol se trouve confronté à des perturbateurs hautes fréquences, la solution consiste en une correction a posteriori au cours d'une étape de traitement des images acquises.

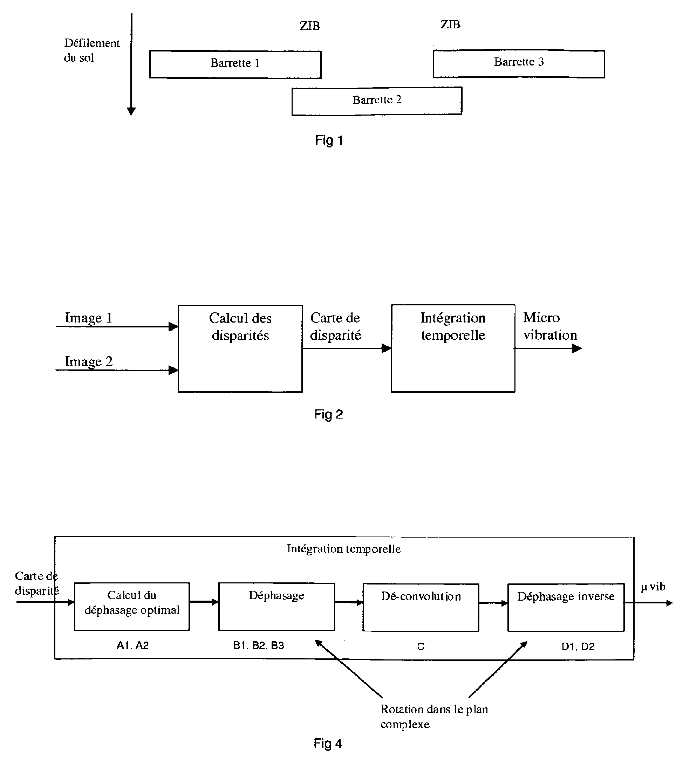

Des méthodes d'estimation de ces micro-vibrations à partir des images acquises par l'imageur ont été développées. Ces méthodes exploitent la particularité de l'imageur à observer la même scène à plusieurs instants différents ; l'imageur fonctionne en mode « pousse-balai » (ou « push-broom » en anglais) et comporte différentes barrettes de détecteurs telles que les images (image 1, image 2) respectivement issues de ces barrettes (barrette 1, barrette 2) se recouvrent totalement ou partiellement, comme illustré figure 1. Cette caractéristique est présente

1. lors de l'utilisation d'un plan focal « à plat ». Dans ce type de plan focal, l'ensemble des barrettes de détecteurs nécessaire pour couvrir toute la fauchée, c'est-à-dire toute la largeur de la scène, doivent être positionnées en quinconce comme sur la figure 1, pour des questions d'aménagements et de reconstruction de la ligne image. Ainsi les images issues de deux barrettes proches comportent une zone de recouvrement appelé « zone inter-barrette »(ZIB). Dans ces ZIBs un même point au sol est vu par une barrette paire et une barrette impaire à deux instants différents.
2. Un autre exemple de configuration est le cas des barrettes XS telles qu'installées sur la plateforme PLEIADE HAUTE RESOLUTION ou PHR.

Les micro-vibrations du satellite et donc de l'imageur engendrent des distorsions géométriques dans les images qui sont mesurées sous forme de décalages d'alignement entre les points homologues des différentes barrettes ; ces décalages peuvent être mesurés par des méthodes de type corrélation ou flot optique. Ces décalages sont aussi appelés disparités et l'ensemble des disparités sur une zone est désignée carte de disparités.

La première étape de traitement d'image montrée figure 2, exploite les zones de recouvrement (ZIBs dans l'exemple) afin d'en calculer les cartes de disparités engendrées par les micro-vibrations μvib(t). Cette étape d'estimation de la carte de disparités s'appuie sur une méthode classique de type corrélation dense entre images acquises par les barrettes.

A partir de ces décalages ou plus précisément de cette carte de disparités, l'étape suivante d'intégration temporelle permet de remonter à l'information de micro-vibration μvib(t) ; elle est réalisée par résolution d'un problème inverse de type déconvolution. Une solution de type filtre de Wiener comme décrit dans la demande de brevet EP 1 843 295, mène à des performances peu probantes comme illustré sur la figure 3a qui montre une variation d'une micro-vibration haute fréquence ainsi estimée par rapport à la micro-vibration réelle, cette variation pouvant atteindre environ 25%.

Un autre exemple est le sujet de la thèse de Julien Caron "Restauration en échantillonage irrégulier - Théorie et applications aux signaux et images satellitaires" XP055139098 (2013), ou l'analise des cartes de disposition et l'estimation des micro-vibrations sont liés par l'aproximation polynominale.

En conséquence, il demeure à ce jour un besoin pour un procédé de traitement de ces images permettant d'améliorer ces performances.

L'invention qui s'inscrit dans le cadre de l'étape d'intégration temporelle, est basée sur une méthode de type déconvolution comportant une étape de rotation dans le plan complexe de la carte de disparités.

Plus précisément l'invention a pour objet, un procédé de traitement d'un signal acquis par un imageur monté sur un porteur et soumis à des micro vibrations lors de son mouvement, l'imageur comportant des barrettes de photo détecteurs décalées entre elles dans le plan focal dans le sens du mouvement, et présentant deux à deux des zones de recouvrement dans le sens du mouvement, l'imageur étant apte à acquérir des images selon un mode « push-broom », le procédé comportant :

- une étape d'estimation d'une carte de disparités provoquées par les micro vibrations, à partir de l'acquisition d'au moins deux images et de mesures de décalage entre des zones de recouvrement de ces images, et
- une étape d'estimation des micro vibrations à partir de la carte de disparités.

Il est principalement caractérisé en ce que l'étape d'estimation des micro vibrations comprend :

- un découpage du domaine fréquentiel des micro vibrations en portions $\Omega$ contenant chacune la fréquence d'une unique harmonique de micro vibration,
- pour chaque portion $\Omega$ du domaine fréquentiel :

  o calcul d'un déphasage optimal à partir d'un critère statistique sur la transformée de Fourier de la carte de disparités réduite à cette portion $\Omega$ de domaine fréquentiel,
  o application de ce déphasage optimal à la carte de disparité correspondante,
  o passage dans l'espace de Fourier pour obtenir le spectre de cette carte de disparités déphasée, et sélection de la portion de spectre correspondant à la portion $\Omega$ de domaine fréquentiel,
  o déconvolution de la portion de spectre sélectionnée au moyen d'un filtre de déconvolution,
  o retour dans l'espace direct par transformée de Fourier inverse, et application du déphasage optimal inverse pour obtenir la micro vibration temporelle correspondant à la portion $\Omega$ de domaine fréquentiel considérée,

- une concaténation des micro vibrations obtenues pour chaque portion $\Omega$ de domaine fréquentiel.

Cela permet une amélioration notable de la qualité de restitution des perturbations d'attitude (ou micro-vibrations).

Le déphasage optimal est avantageusement obtenu en maximisant l'écart de la distribution de la TF de la carte de disparités à une loi gaussienne (distribution caractéristique d'un bruit gaussien). Cet écart peut être calculé à partir du kurtosis ou d'une fonction des moments d'ordre supérieur.

Selon une caractéristique de l'invention, les barrettes comportent au moins une barrette panchromatique et une barrette multi-spectrale.

Les barrettes peuvent être décalées entre elles en quinconce.

Les perturbations d'attitude (ou micro-vibrations) présentent typiquement une fréquence supérieure à 10 Hz.

L'invention a aussi pour objet un produit programme d'ordinateur, ledit programme d'ordinateur comprenant des instructions de code permettant d'effectuer les étapes du procédé tel que décrit précédemment, lorsque ledit programme est exécuté sur un ordinateur.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un exemple de configuration des barrettes d'un imageur,
la figure 2 déjà décrite illustre les principales étapes d'un procédé de restitution de micro-vibrations selon l'état de la technique,
les figures 3 illustrent les performances d'un procédé de restitution d'une micro-vibration haute fréquence μvib(t) selon l'état de la technique (fig 3a), et celles d'un exemple de procédé de restitution selon l'invention (fig 3b), avec pour chaque figure la micro-vibration réelle (en trait continu) et la micro-vibration restituée (points restitués sous forme de ronds),
la figure 4 illustre les principales sous-étapes de l'étape d'intégration temporelle selon l'invention,

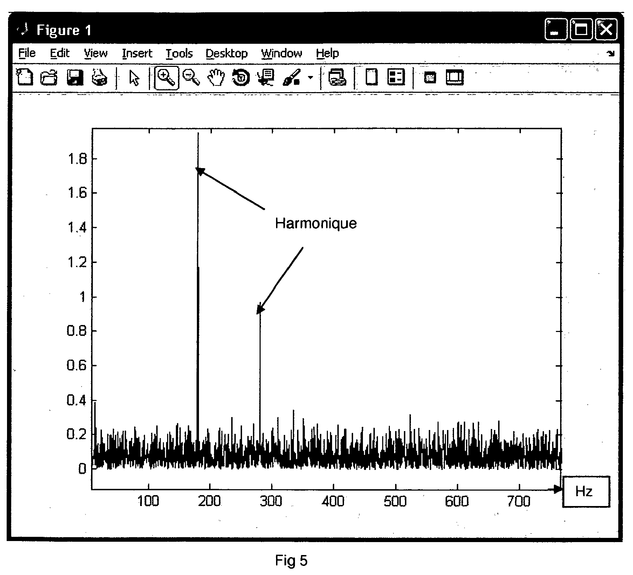

la figure 5 montre schématiquement un exemple de module du spectre de carte de disparité comportant deux harmoniques et donc deux portions de domaine fréquentiel qui doivent être traités séparément,
la figure 6 montre schématiquement un exemple d'impact du déphasage sur l'histogramme de la transformée de Fourier de la carte de disparité (en pointillés : contribution du bruit, en trait plein : contribution d'une microvibration),
la figure 7 montre un exemple de mesure de kurtosis (écart à distribution gaussienne) de la distribution de la transformée de Fourier de la carte de disparité en fonction du déphasage appliqué, permettant la détermination du déphasage optimal.

D'une figure à l'autre, les mêmes éléments sont repérés par les mêmes références.

L'étape d'estimation de la carte de disparités s'appuie sur une méthode classique connue de l'homme du métier de type recherche de points homologues entre des images acquises par des barrettes différentes, ou plus précisément dans les zones de recouvrement de ces images.

Habituellement, on dispose dans le plan focal différents types de barrettes, par exemple des barrettes panchromatiques (PAN) et des barrettes multi-spectrales (XS). Elles sont généralement disposées en quinconce comme montré sur la figure 1 mais d'autres configurations peuvent être envisagées : elles pourraient aussi être alignées et/ou inclinées l'une par rapport à l'autre, etc.

Cette estimation est basée sur les mesures de disparités échantillonnées à haute ou très haute cadence (> 10 kHz). La disparité entre un couple d'image s'écrit :

$$D(k*Te) = \mu vib(k*Te) - \mu vib(t-\Delta T(k*Te)),$$

où $\Delta T(t)$ représente l'écart de temps entre la visibilité d'un même point au sol vu par les deux barrettes, Te représente le temps d'échantillonnage d'une ligne image, k un entier non nul.

L'effet de l'écartement temporel entre les barrettes est donc celui d'un filtre coupe-bande de la forme $[1-\delta(t-\Delta T(t))]$, où $t = k*Te$.(Te étant le temps d'échantillonnage d'une ligne image). Cet écartement temporel $\Delta T(t)$ qui dépend de l'écartement spatial dans le sens du mouvement de l'imageur, est généralement supposé constant, mais le procédé selon l'invention s'applique également dans le cas d'un écartement temporel variable.

La carte de disparités peut par exemple être obtenue en appliquant les étapes de « Mise en correspondance des images » et d' « Estimation des variations angulaires » décrites dans la demande de brevet EP 1 843 295.

L'invention qui s'inscrit dans le cadre de l'étape d'intégration temporelle, est basée sur une méthode d'intégration temporelle de type déconvolution du filtre coupe-bande rappelé ci-dessus, qui comporte une étape de rotation dans le plan complexe des données associées à la carte de disparités.

Les performances insuffisantes de la méthode de l'état de la technique proviennent notamment de ce que le filtre de convolution comporte de nombreux zéros dans le cas considéré, c'est-à-dire aux fréquences de la forme $K/\Delta T$, K étant un entier.

Avant d'effectuer la dé-convolution, une étape de rotation dans le plan complexe est effectuée, comme montré figure 4 :

A1) Le domaine fréquentiel des micro vibrations est découpé en portions $\Omega$ contenant chacune la fréquence d'une unique harmonique. Ce découpage est fait sur la base d'une détection des harmoniques des micro vibrations par exemple par seuillage ; selon une variante les portions sont prédéterminées, connues a priori. Dans l'exemple de la figure, on détecte deux harmoniques à environ 180 Hz et 280 Hz ; le domaine fréquentiel sera donc découpé en deux portions par exemple $\Omega_1 =20$ Hz-250Hz et $\Omega_2=250$ Hz-750 Hz.

Les étapes suivantes sont effectuées de façon indépendante pour chacune de ces portions.

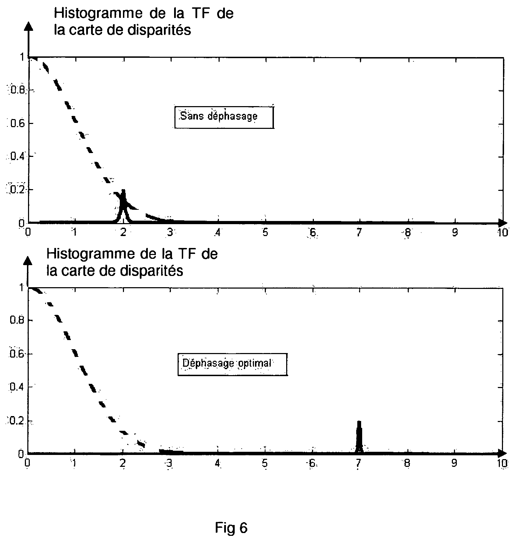

A2) Pour chaque portion $\Omega_2$ de domaine fréquentiel, la représentation du spectre de la carte de disparités est la plus avantageuse lorsque le déphasage appliqué maximise l'écart entre la distribution du spectre et une gaussienne, comme illustré figure 6. Le bruit supposé gaussien a une distribution gaussienne indépendamment du déphasage. En effet, on modélise les disparités selon la formule :

$$D = D\mu vib + bruit$$

où « $D\mu vib$ » représente la disparité due aux micro vibrations et « bruit » représente le bruit de mesure des disparités. Après les étapes de transformée de Fourier et de déphasage cette équation devient :

$$TF(Deph(D,\varphi)) = TF(Deph(D\mu vib, \varphi)) + TF(Deph(bruit, \varphi))$$

où « TF » représente l'opération de transformée de Fourier, et

$$Deph(D, \varphi) : D(k*Te) \mid \text{----> } exp(i*k*\varphi)*D(k*Te)$$

représente l'opération de déphasage d'un angle $\varphi$.

Le troisième terme $TF(Deph(bruit, \varphi))$ a une distribution gaussienne quel que soit $\varphi$. Le second terme $TF(Deph(D\mu vib, \varphi))$ a une distribution non gaussienne qui dépend de $\varphi$. Ainsi lorsque la distribution du premier terme $TF(Deph(D, \varphi))$ s'éloigne d'une gaussienne, c'est que la contribution du second terme augmente. Lorsque l'écart à une gaussienne est maximal, le déphasage $\varphi opt$ est optimal dans le sens où la micro vibration est la plus visible.

Classiquement l'écart d'une distribution à une loi gaussienne peut être mesuré par les moments d'ordre supérieur, et par exemple par les moments d'ordre quatre normalisés appelés « kurtosis » selon :

$$\varphi_{opt} = \max_\varphi( \text{kurtosis}( TF_\Omega(Deph(D,\varphi)) )$$

où $TF_\Omega(f)$ représente la TF de f à la portion de spectre considéré.

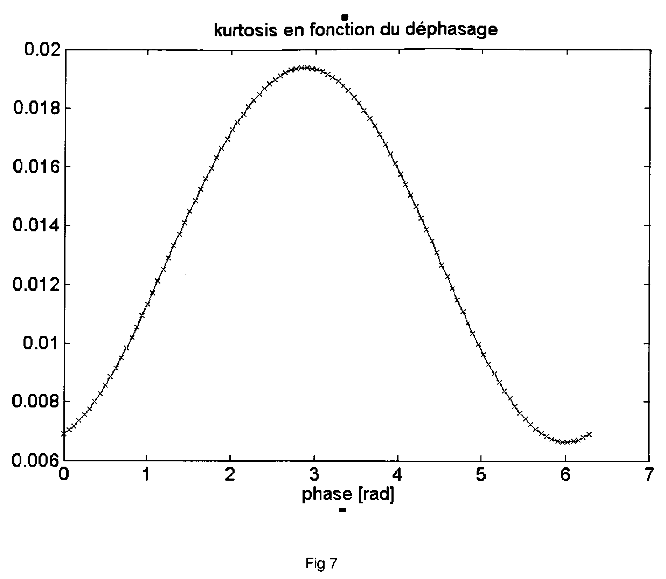

Un exemple de mesure de kurtosis en fonction du déphasage d'un cas typique est montré figure 7. Dans cet exemple, le déphasage optimal vaut ~2.8rad.

Un grand nombre de mesures issues de l'analyse en composantes indépendantes peuvent également être utilisées, notamment les mesures développées par Pierre Common (P. Comon. « Independent component analysis, a newconcept? » Signal Processing, 36(3):287-314, 1994).

A l'issue de cette étape on a obtenu plusieurs déphasages optimaux : un déphasage optimal pour chaque portion de spectre correspondant au domaine fréquentiel $\Omega$ considéré.

B1) Pour chaque portion $\Omega$ de domaine fréquentiel, on applique le déphasage optimal obtenu à la carte de disparité correspondante.

B2) On passe dans l'espace de Fourier pour obtenir le spectre de cette carte de disparités déphasée.

B3) On sélectionne la portion correspondante de ce spectre.

C) La dé-convolution est appliquée dans l'espace déphasé

$$S\_dec = TF(Deph(D, \varphi\_opt)) * Filtre\_deconvolution \; ;$$

on peut utiliser comme filtre de déconvolution le filtre de Wiener comme dans notre exemple, ou le filtre inverse régularisé ou non calculé à partir de la réponse impulsionnelle du filtre initial coupe bande.

D1) Le résultat de cette déconvolution est ramené dans l'espace direct en appliquant successivement la transformée de Fourier inverse puis le déphasage optimal inverse. On obtient alors $\mu$vib(t) selon :

$$\mu vib_\Omega(k^*Te) = \exp(-i^*k^*\varphi opt)^*TF^{-1}(S\_dec)(k^*Te)$$

pour la portion $\Omega$ de domaine fréquentiel considérée.

D2) Enfin les résultats de la dé-convolution de chaque portion $\Omega$ sont concaténés sur l'ensemble des portions $\Omega$ considérées :

$$\mu vib(k^*Te) = Somme_{\{\Omega\}} [ \mu vib_\Omega(k^*Te) ].$$

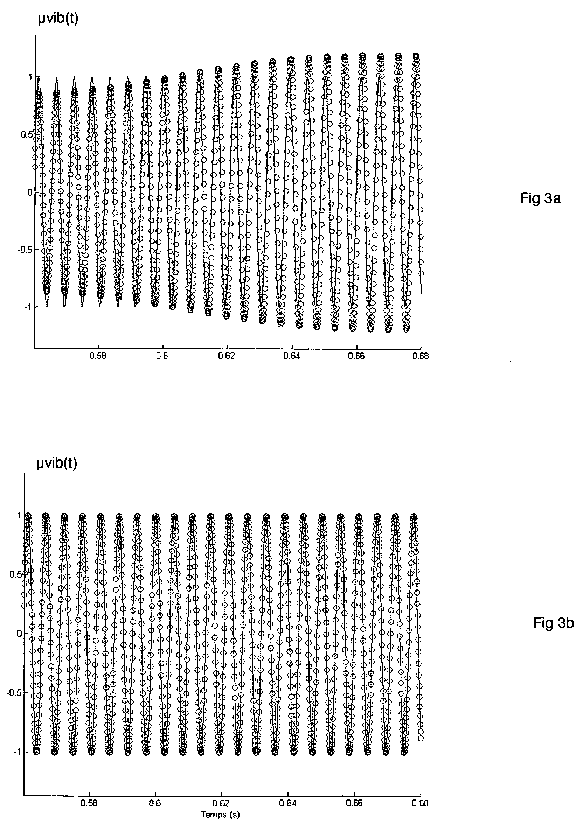

En appliquant le procédé selon l'invention tel que décrit, on a obtenu les performances illustrées sur la figure 3b qui montre une variation de la micro-vibration haute fréquence ainsi estimée par rapport à la micro-vibration réelle, inférieure à 1 %.

L'imageur peut bien sûr être embarqué sur un porteur autre qu'un satellite, tel qu'un autre aéronef, un véhicule terrestre ou maritime, etc.

Ce procédé de traitement d'image peut notamment s'implémenter à partir d'un produit programme d'ordinateur, ce programme d'ordinateur comprenant des instructions de code permettant d'effectuer les étapes du procédé de reconstruction. Il est enregistré sur un support lisible par ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

**Revendications**

1. Procédé de traitement d'un signal acquis par un imageur monté sur un porteur et soumis à des micro vibrations lors de son mouvement, l'imageur comportant des barrettes de photo détecteurs décalées entre elles dans le plan focal dans le sens du mouvement, et présentant deux à deux des zones de recouvrement dans le sens du mouvement, l'imageur étant apte à acquérir des images selon un mode « push-broom », le procédé comportant :

   - une étape d'estimation d'une carte de disparités provoquées par les micro vibrations, à partir de l'acquisition d'au moins deux images et de mesures de décalage entre des zones de recouvrement de ces images, et
   - une étape d'estimation des micro vibrations à partir de la carte de disparités,

   **caractérisé en ce que** l'étape d'estimation des micro vibrations comprend :

- un découpage du domaine fréquentiel des micro vibrations en portions $\Omega$ contenant chacune la fréquence d'une unique harmonique (étape A1),
- pour chaque portion $\Omega$ du domaine fréquentiel :

o calcul d'un déphasage optimal à partir d'un critère statistique sur la distribution de la transformée de Fourier de la carte de disparités réduite à cette portion $\Omega$ de domaine fréquentiel (étape A2),
o application de ce déphasage optimal à la carte de disparité correspondante (étape B1),
o passage dans l'espace de Fourier (étape B2), et sélection de la portion de spectre de la carte de disparité déphasée correspondant à la portion $\Omega$ de domaine fréquentiel (étape B3),
o déconvolution de la portion de spectre sélectionnée au moyen d'un filtre de déconvolution (étape C),
o retour dans l'espace direct par transformée de Fourier inverse, et application du déphasage optimal inverse pour obtenir la micro vibration temporelle correspondant à la portion $\Omega$ de domaine fréquentiel considérée (étape D1),

- une concaténation des micro vibrations obtenues pour chaque portion $\Omega$ de domaine fréquentiel (étape D2).

**2.** Procédé de traitement d'un signal selon la revendication précédente, **caractérisé en ce que** le déphasage optimal est obtenu en maximisant un écart entre la distribution de la TF de la carte de disparités et une gaussienne.

**3.** Procédé de traitement d'un signal selon la revendication précédente, **caractérisé en ce que** cet écart est obtenu par une combinaison linéaire de moments d'ordre supérieur normalisée.

**4.** Procédé de traitement d'un signal selon la revendication précédente, **caractérisé en ce que** cet écart est obtenu par le kurtosis.

**5.** Procédé de traitement d'un signal selon l'une des revendications précédentes, **caractérisé en ce que** les barrettes comportent au moins une barrette panchromatique et une barrette multi-spectrale.

**6.** Procédé de traitement d'un signal selon l'une des revendications précédentes, **caractérisé en ce que** les barrettes sont décalées entre elles en quinconce.

**7.** Procédé de traitement d'un signal selon l'une des revendications précédentes, **caractérisé en ce que** les micro vibrations présentent une fréquence supérieure à 10 Hz.

**8.** Procédé de traitement d'un signal selon l'une des revendications précédentes, **caractérisé en ce que** le porteur est un satellite en orbite.

**9.** Un produit programme d'ordinateur, ledit programme d'ordinateur comprenant des instructions de code permettant d'effectuer les étapes du procédé selon l'une quelconque des revendications précédentes, lorsque ledit programme est exécuté sur un ordinateur.

**Patentansprüche**

**1.** Verfahren zum Verarbeiten eines Signals, das von einem Bildgeber erfasst wurde, der an einem Träger montiert ist und Mikrovibrationen bei seiner Bewegung ausgesetzt ist, wobei der Bildgeber Fotodetektorenleisten umfasst, die in der Fokalebene in der Bewegungsrichtung voneinander versetzt sind und paarweise Überlappungszonen in der Bewegungsrichtung aufweisen, wobei der Bildgeber Bilder in einem "Push-Broom" Modus erfassen kann, wobei das Verfahren Folgendes beinhaltet:

- einen Schritt des Schätzens einer Karte von durch die Mikrovibrationen hervorgerufenen Disparitäten auf der Basis der Erfassung von wenigstens zwei Bildern und von den Versatzausmaßen zwischen Überlappungszonen dieser Bilder, und
- einen Schritt des Schätzens von Mikrovibrationen auf der Basis der Dispautätskarte,

**dadurch gekennzeichnet, dass** der Mikrovibrationenschätzschritt Folgendes beinhaltet:

- Unterteilen der Frequenzdomäne von Mikrovibrationen in $\Omega$ Teile, die jeweils die Frequenz einer einzigen Harmonischen enthalten (Schritt A1),
- für jeden Ω Teil der Frequenzdomäne:

Berechnen einer optimalen Phasenverschiebung auf der Basis eines statistischen Kriterium für die Verteilung der Fourier-Transformation der Disparitätenkarte, reduziert auf diesen Ω Teil der Frequenzdomäne (Schritt A2),
Anwenden dieser optimalen Phasenverschiebung auf die entsprechende Disparitätenkarte (Schritt B1),
Passieren in den Fourier-Raum (Schritt B2) und Auswählen des Spektrumsteils der Disparitätenkarte, phasenverschoben entsprechend dem Ω Teil der Frequenzdomäne (Schritt B3),
Entfalten des gewählten Spektrumsteils mittels einer Entfaltungsfilters (Schritt C),
Zurückkehren in den direkten Raum durch inverse Fourier-Transformation und Anwenden der optimalen inversen Phasenverschiebung zum Erhalten der zeitlichen Mikrovibration entsprechend dem Ω Teil der betrachteten Frequenzdomäne (Schritt D1),

- Verketten von Mikrovibrationen, die für jeden Ω Teil der Frequenzdomäne erhalten wurden (Schritt D2).

2. Verfahren zum Verarbeiten eines Signals nach dem vorherigen Anspruch, **dadurch gekennzeichnet, dass** die optimale Phasenverschiebung durch Maximieren einer Verschiebung zwischen der Verteilung der FT der Disparitätenkarte und einer Gauß'schen Verteilung erhalten wird.

3. Verfahren zum Verarbeiten eines Signals nach dem vorherigen Anspruch, **dadurch gekennzeichnet, dass** diese Abweichung durch eine lineare Kombination von Momenten einer höheren normalisierten Ordnung erhalten wird.

4. Verfahren zum Verarbeiten eines Signals nach dem vorherigen Anspruch, **dadurch gekennzeichnet, dass** diese Abweichung durch Kurtosis erhalten wird.

5. Verfahren zum Verarbeiten eines Signals nach einem der vorherigen Ansprüche, **dadurch gekennzeichnet, dass** die Leisten wenigstens eine panchromatische Leiste und eine multispektrale Leiste umfassen.

6. Verfahren zum Verarbeiten eines Signals nach einem der vorherigen Ansprüche, **dadurch gekennzeichnet, dass** die Leisten durch Staffelung voneinander versetzt sind.

7. Verfahren zum Verarbeiten eines Signals nach einem der vorherigen Ansprüche, **dadurch gekennzeichnet, dass** die Mikrovibrationen eine Frequenz von mehr als 10 Hz haben.

8. Verfahren zum Verarbeiten eines Signals nach einem der vorherigen Ansprüche, **dadurch gekennzeichnet, dass** der Träger ein Satellit in Umlaufbahn ist.

9. Computerprogrammprodukt, wobei das Computerprogramm Code-Befehle umfasst, die es zulassen, die Schritte des Verfahrens nach einem der vorherigen Ansprüche auszuführen, wenn das Programm auf einem Computer ausgeführt wird.


**Claims**

1. Method for processing a signal acquired by an imager which is mounted on a carrier and which is subjected to microvibrations during its movement, the imager comprising bars of photodetectors which are offset from each other in the focal plane in the movement direction and having in pairs overlap zones in the movement direction, the imager being capable of acquiring images in a "push-broom" mode, the method comprising:

- a step of estimating a disparity map brought about by the microvibrations, from the acquisition of at least two images and offset measurements between overlap zones of these images, and
- a step of estimating microvibrations from the disparity map,

**characterised in that** the step of estimating microvibrations comprises:

- a cutting of the frequency domain of the microvibrations into portions Ω which each contain the frequency of a single harmonic (step A1),

- for each portion $\Omega$ of the frequency domain:

calculating an optimum phase shift from a statistical criterion relating to the distribution of the Fourier transform of the disparity map reduced to this portion $\Omega$ of the frequency domain (step A2), application of that optimum phase shift to the corresponding disparity map (step B1), change to Fourier space (step B2) and selection of the spectrum portion of the out-of-phase disparity map corresponding to the portion $\Omega$ of the frequency domain (step B3), deconvolution of the selected spectrum portion using a deconvolution filter (step C), return to direct space by means of inverse Fourier transform, and application of the optimum inverse phase shift in order to obtain the temporal microvibration corresponding to the portion $\Omega$ of the frequency domain in question (step D1),

- concatenation of the microvibrations obtained for each portion $\Omega$ of the frequency domain (step D2).

2. Method for processing a signal according to the preceding claim, **characterised in that** the optimum phase shift is obtained by maximising a deviation between the distribution of the Fourier transform of the disparity map and a Gaussian map.

3. Method for processing a signal according to the preceding claim, **characterised in that** this deviation is obtained by means of a standardised linear combination of moments of higher order.

4. Method for processing a signal according to the preceding claim, **characterised in that** this deviation is obtained by means of kurtosis.

5. Method for processing a signal according to any one of the preceding claims, **characterised in that** the bars comprise at least a panchromatic bar and a multi-spectral bar.

6. Method for processing a signal according to any one of the preceding claims, **characterised in that** the bars are mutually offset in a zig-zag manner.

7. Method for processing a signal according to any one of the preceding claims, **characterised in that** the microvibrations have a frequency greater than 10 Hz.

8. Method for processing a signal according to any one of the preceding claims, **characterised in that** the carrier is a satellite in orbit.

9. A computer program product, the computer program comprising coding instructions which enable the steps of the method according to any one of the preceding claims to be carried out, when the program is carried out on a computer.

Défilement
du sol

ZIB

ZIB

Barrette 1

Barrette 3

Barrette 2

Fig 1

Image 1

Image 2

Calcul des
disparités

Carte de
disparité

Intégration
temporelle

Micro
vibration

Fig 2

Intégration temporelle

Carte de
disparité

Calcul du
déphasage optimal

Déphasage

Dé-convolution

Déphasage inverse

µ vib

A1, A2

B1, B2, B3

C

D1, D2

Rotation dans le plan
complexe

Fig 4

Fig 3a

Fig 3b

EP 2 884 456 B1

Fig 5

11

Histogramme de la TF de
la carte de disparités

Sans déphasage

Histogramme de la TF de
la carte de disparités

Déphasage optimal

Fig 6

Fig 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1843295 A

**Littérature non-brevet citée dans la description**

- **JULIEN CARON.** *Restauration en échantillonage irrégulier - Théorie et applications aux signaux et images satellitaires,* 2013

- **P. COMON.** Independent component analysis, a newconcept. *Signal Processing,* 1994, vol. 36 (3), 287-314